Europäisches Patentamt

European Patent Office

Office européen des brevets

(11) Publication number: **0 150 144**

**A2**

# EUROPEAN PATENT APPLICATION

(21) Application number: **85400042.9**

(22) Date of filing: **10.01.85**

(51) Int. Cl.⁴: **B 67 B 7/86**
**B 67 D 3/04**
**//F16K21/04**

(30) Priority: **18.01.84 US 571758**

(43) Date of publication of application:
**31.07.85 Bulletin 85/31**

(84) Designated Contracting States:
**CH DE FR GB IT LI SE**

(71) Applicant: CALGON CORPORATION
Route 60-Campbell's Run Road
Robinson Township Pennsylvania 15205(US)

(72) Inventor: Christine, William C.
341 St. John Street
Catasaugua Pennsylvania 18032(US)

(72) Inventor: Trillich, Charles H.
220 Middle Valley Road
Long Valley New Jersey 07853(US)

(74) Representative: Warcoin, Jacques et al,
Cabinet Régimbeau 26, avenue Kléber
F-75116 Paris(FR)

(54) A low-energy-actuated valve assembly.

(57) The instant invention is directed to a disposable container and a low-energy-actuated valve assembly comprising:

(a) a flexible container (1) for holding liquids, capable of being punctured at the time of original use through a fitment attached thereto; and

(b) a valve (3) connected to said container fitment, comprising:

(i) a housing (4) with an opening for admission of liquids and an opening for the exit of liquids;

(ii) a movable element (7, 14) within said housing which may block said opening for the exit of liquids; and

(iii) an actuator extender, which uses a low energy to move, associated with said housing which dislodges said movable element from said opening for the exit of liquids with a force of less than 200 g.

Fig. 1.

Croydon Printing Company Ltd.

C-1357

"A LOW-ENERGY-ACTUATED VALVE ASSEMBLY"

## Background of the Invention

This invention relates to a low-energy-actuated valve. It is especially useful in automatic dispensers, in particular for dispensing liquid detergents, soaps and germicides. A need has long existed for a delivery system that would store an antimicrobial solution until its time of use and which would be low in contamination through continual use. Such a system is of high value in aiding the control of infection in healthcare environments. This invention provides a disposable flexible container and valve assembly wherein the antimicrobial solution is stored in the flexible container and does not enter the valve until it is ready to be used in a dispenser. The low-energy-actuated valve of this invention is especially useful in automated dispensers used in surgical rooms of hospitals where the dispensers must be run on batteries, rather than electricity from conventional outlets.

Existing valves known in the art require an actuation energy much higher than needed for this application. These valves would consume too much energy in operation to make battery operation feasible. Decreasing the tolerances of the valve sealing surfaces effectively lowers the energy requirement, but also produces a valve that will be prone to leak during storage and use. The object of this invention is to provide a leak-free product package by using low-energy valve configurations in combination with a piercing mechanism that minimizes the exposure time of the liquid to the valve.

It is an object of this invention that the flexible container and valve assembly may be thrown away after the emptying of the container, thereby minimizing the opportunities for a buildup of micro-organisms.

It is a further object of this invention that the valve be low-energy-actuated so that a minimum of electric power is consumed. This allows the use of disposable or rechargeable batteries.

A further object of the instant invention is to provide a battery-operated delivery system for surgical scrub formulations.

A Brief Description of the Drawing

FIGURE 1 is a cross-section view of the flexible container and valve with a spring and poppet.

FIGURE 2 is a cross-section view of the flexible container and valve with a valve slide mechanism.

## Description of the Invention

The instant invention is directed to a disposable container and a low-energy-actuated valve assembly comprising:

(a) a flexible container for holding liquids, capable of being punctured at the time of original use through a fitment attached thereto; and

(b) a valve connected to said container fitment, comprising:

(i) a housing with an opening for admission of liquids and an opening for the exit of liquids;

(ii) a movable element within said housing which may block said opening for the exit of liquids; and

(iii) an actuator extender, which uses a low energy to move, associated with said housing which dislodges said movable element from said opening for the exit of liquids with a force of less than 200 g, preferably 50 to 150 g.

The instant invention is also directed to a low-energy-actuated valve comprising:

(a)    a housing with an opening for admission of
       liquids and an opening surrounded by a
       valve seat for the exit of liquids;

(b)    an integral molded spring and poppet
       within said housing, wherein said spring
       acts to hold said poppet against said
       valve seat; and

(c)    an actuator extender associated with said
       housing which dislodges said movable
       element from said valve seat with a force
       of less than 200 g, preferably 50 to 150 g.

The instant invention is also directed to an integral molded spring and poppet for use in a valve having a valve seat wherein said spring acts to hold said poppet against said valve seat.

The instant invention is also directed to a low-energy-actuated valve comprising:

(a)    a housing with an opening for admission of
       liquids and an opening for the exit of
       liquids;

(b)    a movable valve slide within said housing
       which, in one position, blocks said
       opening for the exit of liquids and, in a
       second position would allow liquids to
       exit from the housing through said opening
       for the exit of liquids.

The container, preferably a pouch, may be made of any flexible material which will hold liquids. However, the material must be compatible with the

0150144

liquids which will be stored in the flexible container. For example, iodine is not retained by polyethylene film without a suitable barrier film layer. Since it is intended that the container be disposable, the cost of the material, depending on its intended use and value, is important. The container should also be made of a material which may be punctured. The flexible material is preferably a film-forming polymer. Examples include polyethylene, polypropylene, polyesters, polyamides, polyvinyl chloride and copolymers thereof. The film may be a composite in order to provide various characteristics, such as dimensional stability, inertness to the contained liquid, and containability, i.e. a barrier. The preferred composite material is a laminated film of ethylene/vinyl acetate copolymer, nylon, saran (vinylidene chloride) and polyethylene. The copolymer is heat-sealable. The nylon gives the film dimensional stability. The saran acts as a barrier to water and vapor loss. The polyethylene will provide a chemically inert surface.

The container should have a fitment attached thereto in order to receive the valve, for example heat sealed, thereby affixing it firmly to said container. The fitment is preferably a plastic or metal ring attached to the container for receiving and quiding the valve. It also may act to secure the container and valve as to form an integral unit.

- 6 -                    C-1357

**0150144**

The valve is generally of plastic or metal. The valve is made up of a housing with openings at opposite ends. The end of the housing associated with the container has an opening for admission of liquids from the container, while at the opposite end is an exit for the liquids to leave the housing; optional lateral openings in the valve housing wall may be further provided, for ensuring a use of the whole inner content, with said openings placed near the level of the bottom of said container when in use. The exit may be surrounded by a valve seat. In one embodiment, the housing contains a movable element which sits in the valve seat and seals the valve seat so that liquid can not exit the housing. Theoretically, the weight of the movable element could be sufficient to seal the valve seat and prevent liquid from exiting. However, the low viscosity liquids contemplated for use and the necessity that the movable element be displaced with a minimum of energy, requires that a means, such as a spring, be provided to hold the movable element against the valve seat. It is preferred that the sealing means provide an axial force against the movable element while the actuator extender and actuator provide a perpendicular force. In an alternative embodiment, a valve slide may be used as the movable element and actuator extender. The valve slide is designed so that fluid cannot exit the valve in one position but can in a second position. It is critical to the instant invention that the movable element and actuator be designed such that the actuator requires a low energy to dislodge the movable element, i.e. a force of less than 200 g should be required. If a lubricant, such as silicone, graphite, teflon or oil, is present on the actuator and/or acuator extender, a force of 50 to 125 g is preferred. In the absence of a lubricant, a force of 100 to 150 g is preferred.

In a preferred embodiment, a spring and poppet are intregrally molded, preferably of plastic. It is also preferred that the spring produce an axial force to the poppet urging it against the valve seat. For an easy mounting, the valve housing is molded in separate parts; thus, the poppet and spring (integral or not therewith) are first added, and then the separate parts of said housing are bound together, e.g. glued.

In another preferred embodiment, the valve housing at the opposite end from the valve exit has sharp ends which act as piercers to pierce the flexible container. This may be accomplished by the end of the housing forming a continuous single sharp edge, a raised sharp point or a series of points (like a crown); it is also possible to use a separate spear-type piercer, mounted at one end of said valve housing.

The housing and fitment may be designed with a "park and lock" feature. In the "park" position, the valve housing sits in the fitment without piercing the flexible container. Some resistance means is provided to prevent the accidental piercing of the container. The housing may be inserted further into the fitment until the piercing ends of the housing pierce the flexible container and the housing locks into the fitment. This piercing is normally done at the time of original use. The container and valve assembly may be placed in a dispenser. The dispenser may be designed so that the piercing movement of the valve is accomplished by the mere insertion of the assembly in the dispenser. The "park and lock" feature may be accomplished by a number of ways. For example, by the presence of a male groove on the inner surface of the fitment and two female grooves on the outer surface of the housing. It could also be accomplished by having two female grooves on the inner surface of the fitment and a single male groove on the exterior of the housing.

The actuator or actuating slide and actuator extender mechanism accomplishes the dual purpose of controlling valve operation and providing a coupling means to the dispenser. The actuator is a part of the dispenser, while the actuator extender is a part of the valve. The actuator (and actuator extension) preferably will only require a maximum one-half inch dispalcement to sufficiently dislodge the movable element to dispense fluids. It is more preferred that the displacement be less than one-fourth inch, and most preferably three-sixteenths inch or less. The coupling means of the actuator and actuator extender (or valve slide) can be mechanical or more preferably, magnetic. The actuator in the preferred embodiment is magnetically connected with the actuator extender (or valve slide). An iron slug and magnet are separately placed in either the actuator or actuator extender (or valve slide). An electric pulse delivered through a solenoid moves the actuator and actuator extender (or valve slide).

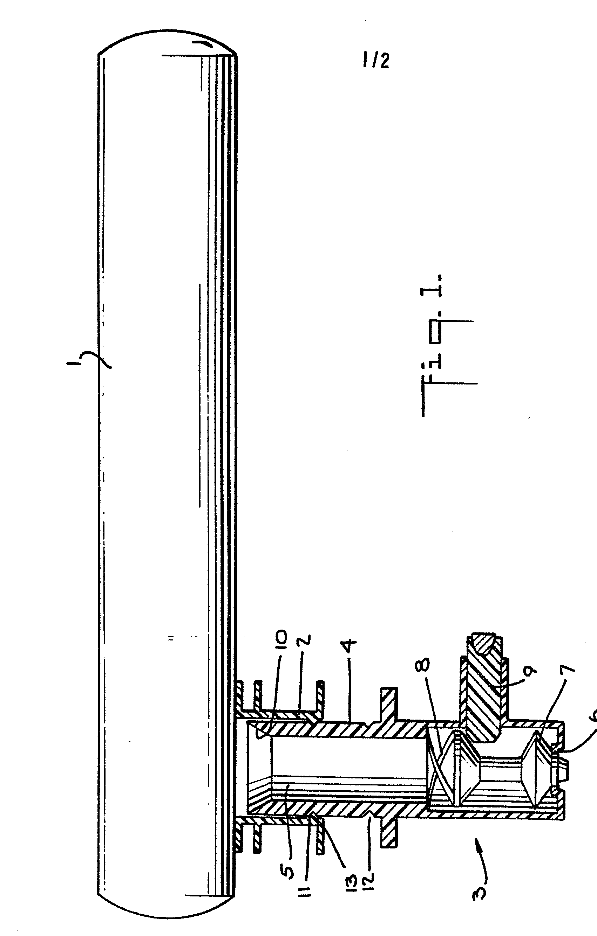

One embodiment of the container and valve assembly is shown in FIGURE 1. The flexible container (1) has a fitment (2) firmly attached to it to receive the valve (3). In the figure, the valve (3) has already been inserted in the fitment. In this embodiment, the valve (3) is separable from the container (1) and fitment (2). The valve (3) comprises a valve housing (4) with an opening (5) for admission of the contents of the container (1) and a valve seat (6) for exit of the contents of the container (1) which have entered the valve (3). The valve housing (4) of the figure also has an opening (not numbered) for the actuator extender (9) to couple with the actuator (not shown). The actuator extender is moved by an external energy source, preferably an electric pulse delivered through a solenoid (not shown) through the actuator (not shown). The actuator is thus associated with an energy source which delivers, via displacement, the energy to move the movable element. The valve housing (4) surrounds a movable element (7), or poppet, which in the rest position, sits snugly against the valve seat (6). A spring (8) may also hold the movable element (7) against the valve seat (6). The admission opening (5) end of the valve housing (4) is beveled to form a sharp edge, thus forming piercing mechanism integral therewith. The outer surface of the valve housing (4), near the admission opening (5), has two axially spaced grooves, a parking groove (11) and a locking groove (12). A tongue (13) on the inner surface of the fitment (2) will engage either of the grooves (11) and (12). The fitment tongue (13) and parking groove (11) are positioned so that, when engaged, the piercer (10) will not accidentally puncture the container (1). The fitment tongue (13) and locking groove (12) are positioned so that, when engaged, the piercer (10) will definitely enter the flexible container (1), but not so far as to create a barrier for admission of the contents of the container (1) into the valve housing (4).

In operations, the valve (3) and container (1) may be shipped separate. In the alternative, they may be shipped with the valve (3) engaged in the fitment (2) in the parked position, i.e. the parking groove (11) and the fitment tongue (13) engaged. At the time of desired use, the container (1) and valve (3) assembly may be placed in a dispenser. The valve (3) may be manually forced into the locked or pierced position by engaging the locking groove (12) and fitment tongue (13). In the alternative, the dispenser may be designed so that the method of insertion of the container (1) and valve (3) assembly into the dispenser forces the valve (3) from the parked position to the locked position. Once the container (1) has been pierced by the piercer (10), the contents of the container (1) flow through the admission opening (5), filling the valve (3) and surrounding the movable element (7) and spring (8). In the rest position, shown in FIGURE 1, none of the contents exits the valve (3), since the movable element (7) seals the valve seat (6). In order to dispense the contents from the valve (3), the actuator extender (9) is electrically or manually moved against the movable element (7) sufficent to displace the movable element (7) from the valve seat (6) to allow contents to be dispensed from the valve (3) through the valve exit (6). When sufficient contents, or at a predetermined time interval, the actuator extender (9) is electrically moved away from the movable element (7), allowing the movable element (7) by gravity, weight of the contents (assuming the weight is greater than the bouyancy of the movable element), and the action of the spring (8) to re-seal the valve seat (6). The actuator extender / movable element displacement may be repeated until the contents have been totally dispensed from the container (1) / valve (3) assembly. At this point, they may be thrown away and a new container (1) / valve (3) assembly inserted in the dispenser.

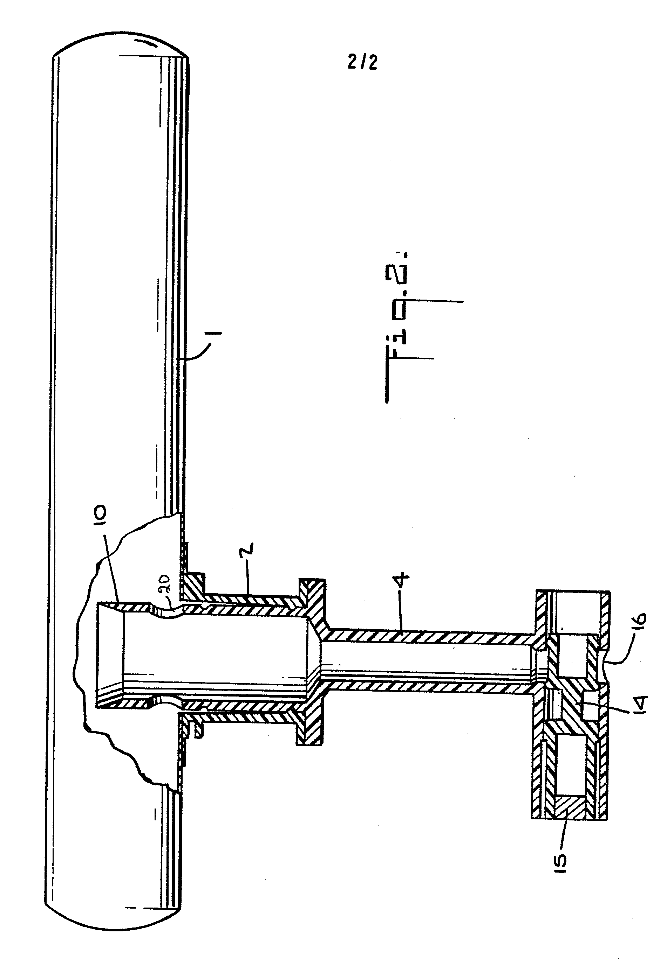

In FIGURE 2, the valve housing (4) contains a valve slide (14) with an iron slug or magnet (15) in one end. The dimensions of the middle piece of the valve slide is less than the space in which it is slid, in both height and depth. The valve and container assembly is shown in the pierced position with the piercer (10) extending through the wall of the flexible container (1). Two optional lateral openings (referred 20) provided in the valve housing wall are illustrated, for ensuring a better use of the whole inner content, with said openings placed near the level of the bottom of said container when in use.

In the valve slide embodiment, an actuator extension is not necessary since the valve slide also acts as an actuator extension. An electric pulse delivered through a solenoid moves the actuator which is magnetically coupled to the valve slide.

- 13 - 0150144

WHAT IS CLAIMED IS:

1.    A disposable container and a low-energy-actuated valve assembly comprising:

    (a)    a flexible container (1) for holding liquids, capable of being punctured at the time of original use through a fitment (2) attached thereto; and

    (b)    a valve (3) connected to said container fitment, comprising:

        (i) a housing (4) with an opening for admission of liquids and an opening for the exit of liquids;

        (ii) a movable element (7,14) within said housing which may block said opening for the exit of liquids; and

        (iii) an actuator extension, which requires a low energy to actuate, associated with said housing which dislodges said movable element (7,14) from said opening for the exit of liquids with a force of less than 200 g.

2.    The assembly of Claim 1, wherein said movable element (7) is a poppet.

3.    The assembly of Claim 2, wherein said poppet (7) is part of an integral molded spring and poppet.

4.      The assembly of Claim 1, wherein the end (10) of said valve housing (4) with the opening for admission of liquids is a piercer for gaining access to the liquid in said flexible container at the time of original use.

5.      The assembly of anyone of Claims 1 to 4, wherein said housing and said fitment have a first locking means (11,13) for parking said piercer in a position wherein said piercer will not accidently puncture said flexible container prior to the time of original use.

6.      The assembly of Claim 5, wherein said housing and said fitment have second locking means (12,13) associated with said piercer for locking said piercer in a position which pierces said flexible container.

7.      The assembly of Claim 1, wherein said actuator extension and said movable element are combined into a sliding valve (14).

8.      A low-energy-actuated valve comprising:

(a)    a housing with an opening for admission of liquids and an opening surrounded by a valve seat for the exit of liquids;

(b)    an integral molded spring and poppet within said housing, wherein said spring acts to hold said poppet against said valve seat; and

(c)   an actuator extender associated with said
      housing which dislodges said poppet from
      said valve seat with a force of less than
      200 g.


9.    The valve of Claim 8, wherein said valve
is a check valve.


10.   The valve of Claim 8, further comprising a
piercer for gaining access to the contents of a
container at the time of use.


11.   An integral molded spring and poppet for
use in a valve having a valve seat wherein said
spring acts to hold said poppet against said valve
seat.


12.   The integral molded spring and poppet of
Claim 11, wherein said spring produces an axial
force to said poppet thereby urging it against said
valve seat.


13.   The integral molded spring and poppet of
Claim 11, wherein said spring is at the opposite
end of the poppet from said valve seat.


14.   A low-energy-actuated valve comprising:


(a)   a housing with an opening for admission of
      liquids and an opening for the exit of
      liquids;

(b)   a valve slide within said housing which, in one position, blocks said opening for the exit of liquids and, in a second position would allow liquids to exit from the housing through said opening for the exit of liquids.

Fig. 1.

Fig.2.

2/2

0150144